# EUROPÄISCHE PATENTSCHRIFT

(11) **EP 1 500 903 B1**
(45) Veröffentlichungstag und Bekanntmachung des Hinweises auf die Patenterteilung: **09.05.2012**
(21) Anmeldenummer: 04017376.7
(22) Anmeldetag: 22.07.2004
(51) Int. Cl.: G01B 5/00, G01B 5/008

(54) **Koordinaten-Messmaschine**
Coordinate measuring machine
Machine de mesure de coordonnées

(30) Priorität: 23.07.2003 DE 10333561
(43) Veröffentlichungstag der Anmeldung: 26.01.2005
(73) Patentinhaber: Carl Zeiss Industrielle Messtechnik GmbH, 73447 Oberkochen (DE)
(72) Erfinder: Poglitsch, Christof, 73434 Aalen (DE); Jacobs, Klaus, 89551 Königsbronn-Ochsenberg (DE); Wiedmann, Wolfgang, 73434 Aalen (DE); Grieser, Christoph, 73540 Heubach (DE); Lonardoni, Ronald, 73463 Westhausen (DE); Leitenberger, Werner, 89520 Heidenheim (DE)
(74) Vertreter: Geyer, Fehners & Partner

(56) Entgegenhaltungen:
- EP-A- 0 564 152
- DE-A- 19 958 306
- DE-A1- 4 325 337
- US-B1- 6 202 316

## Beschreibung

Die Erfindung bezieht sich auf eine Koordinaten-Meßmaschine zur Vermessung eines dreidimensionalen Werkstücks, mit einem Meßtisch, auf dem das Werkstück positionierbar ist, mit einem Meßkopf, mit dem das Werkstück in drei Raumrichtungen relativ zum Meßtisch abtastbar ist, und mit einer ersten, auf zwei zueinander parallelen Führungsschienen in eine erste Raumrichtung beweglichen Trageinrichtung für den Meßkopf; wobei diese Trageinrichtung Führungselemente aufweist, längs derer der Meßkopf mindestens in einer weiteren, zur ersten senkrechten Raumrichtung verfahrbar ist.

Koordinaten-Meßmaschinen werden im industriellen Fertigungsprozeß oder zur Qualitätssicherung eingesetzt, um Werkstücke in drei Raumrichtungen präzise zu vermessen. Bei herkömmlichen Koordinaten-Meßmaschinen ist üblicherweise eine raumfeste Grundachse (die sogenannte X-Achse) bei ihrer raumfesten Montage mit einem steifen Fundament oder einem anderen steifen Körper, beispielsweise einer Granitplatte, verbunden. Es sind aber auch Baumformen bekannt, bei denen sie an einen Balken befestigt wird, der seinerseits mit einem steifen Fundament verbunden ist. Darüber hinaus ist es bekannt, die erwähnte Grundachse mit dem Boden eines Gebäudes zu verbinden, sie an der Decke eines Gebäudes zu befestigen oder sie auf Stützen aufzuhängen.

All diesen bekannten Konzepten ist gemeinsam, daß die Steifigkeit der Koordinaten-Meßmaschine in Richtung der Grundachse durch das steife Fundament oder einen steifen Fundamentkörper bestimmt wird, weil die Grundachse selbst in ihrer Verkörperung wesentlich weniger steif ist. Wenn daher Koordinaten-Meßmaschinen realisiert werden sollen, bei denen die Grundachse sich, je nach Einsatzfall, in unterschiedlichen Stellungen befindet, so muß den weiter oben angegebenen Überlegungen jeweils individuell Rechnung getragen werden. Dies erfordert für jeden Einzelfall eine sehr aufwendige und komplizierte Berechnung der Trag- und Befestigungsstrukturen für die Grundachse. Bekannte Koordinaten-Meßmaschinen umfassen z. B. ein portalartiges Gestell und einen Meßtisch, wobei das Gestell einen zur Abtastung des auf dem Meßtisch liegenden Werkstücks dienenden Meßkopf trägt, mittels dessen das Werkstück in drei zueinander senkrechten Raumrichtungen relativ zum Meßtisch abtastbar ist.

Aus der DE 43 28 533 C2 ist eine Koordinaten-Meßmaschine bekannt, bei der der Meßkopf an einem den Meßtisch an einer dessen Seiten umgreifenden Ausleger sitzt, der seinerseits unterhalb des Meßtisches mit einem in drei Raumrichtungen verfahrbaren Meßschlitten befestigt ist. Dabei sind unterhalb des Meßtisches zwei horizontal verlaufende, parallele Y-Führungen montiert, auf denen jeweils ein Y-Schlitten verschiebbar angeordnet ist. Die beiden Y-Schlitten sind über eine horizontale, senkrecht zu den Y-Führungen angeordnete X-Führung verbunden, auf der ein verschiebbarer X-Schlitten sitzt, der seinerseits eine vertikale Z-Führung in Form einer Führungssäule trägt. Der Meßtisch ist mittels eines Rahmens mit einem Fundament verbunden ist. Die Gesamtanordnung des mehrfach abgewinkelten Auslegerarmes in Verbindung mit den Führungen unterhalb des Meßtisches und dem Umgreifen desselben führt zum Auftreten ganz erheblicher Biege- und Kippmomente nicht nur an den Winkelstellen des Auslegers, sondern auch an dessen Führungen unterhalb des Meßtisches, wodurch insgesamt unerwünschte Verbiegungen und Torsionen am Meßarm eintreten, die zum Verfälschen der Meßergebnisse führen können.

Bei der aus der DE 693 10 008 T2 (bzw. EP 0 564 152 A2) bekannten Koordinaten-Meßmaschine ist an einem Ende des Meßtisches eine nach oben ragende Stütze in Form eines aus Aluminiumblech bestehenden Kastens angebracht, der an seiner Unterseite zur Tischoberfläche hin offen ist. Die Seitenwände dieses Kastens und dessen dem Meßtisch abgewandte Rückseite werden von flachen Aluminiumblechen gebildet. Die Bleche der beiden Seitenwände sind an ihren dem Meßtisch zugewandten Enden jeweils dreifach rechtwinklig umgebogen, wodurch von unten nach oben verlaufende, im Querschnitt nahezu rechtwinkelige Endverstärkungsprofile entstehen. Auf seiner dem Meßtisch zugewandten Vorderseite wird der Kasten durch ein vorderes Aluminiumblech verschlossen, das an einem der seitlichen Endverstärkungsprofile der Seitenwände befestigt ist, während es mit der anderen durch gleitende Federklemmen verbunden ist, damit eine Relativbewegung zwischen diesen Endverstärkungen der Seitenbleche spannungsfrei möglich ist, wenn eine Auslegerkonstruktion oben an dem Kasten befestigt ist.

Diese Auslegerkonstruktion besteht aus zwei auf der Oberseite des Kastens an diesem befestigten, parallel zueinander liegenden Auslegerarmen, die den Meßtisch auf dessen im wesentlichen gesamter Breite überragen. Zwischen beiden Auslegerarmen ist ein Brückenelement angeordnet, das an seinen beiden Enden auf jeweils einem der Aufleger in einer in dessen Längsrichtung (Y-Richtung) verlaufenden Führungsschiene verschieblich ist.

Das Brückenelement ist seinerseits in Querrichtung (X-Richtung) jeweils an seiner Vorderseite und an seiner Rückseite ebenfalls mit einer Führungsschiene versehen, auf der jeweils ein das Brückenelement an dessen Oberseite übergreifender Schlitten gleitet, der an seiner Vorderseite eine zum Meßtisch hin und von diesem weg (in Z-Richtung) bewegliche Spindel trägt, auf welcher der Meßkopf sitzt. Der ganze Aufbau ist als eine leichtgewichtige Blech- oder Aluminiumkastenstruktur ausgebildet, die insgesamt allerdings eine nur relativ geringe Starrheit aufweist, so daß hier nur Auslegerarme relativ kurzer Länge eingesetzt werden können, da sie ansonsten aufgrund ihres Gewichtes und des auf ihnen sitzenden Brückenelementes unerwünschte Verbiegungen hervorrufen und damit Verfälschungen des Meßergebnisses bewirken können. Dabei ist insbesondere an dem die Auslegearme tragenden Leichtbau-Kasten das Auftreten unerwünschter Torsionen und Verbiegungen zu erwarten.

Es ist ferner bekannt, bei Meßmaschinen, bei denen ein Rahmen aus einer Gußkonstruktion oder aus Polymerbeton eingesetzt wird, zwei parallele X-Längsführungen für einen Aufleger direkt am Maschinenrahmen anzubringen, wobei die Aufspannflächen für diese Linearführungen direkt am Maschinengestell bearbeitet werden müssen. Hierbei treten allerdings infolge der unterschiedlichen Werkstoffe für die aus Metall bestehenden Schienen und für den Rahmen aus einer Guß- oder einer Polymerbeton-Konstruktion thermische Spannungsprobleme auf, was eine gute Funktionsfähigkeit der Maschinen nur bei Einsatz in einem relativ geringen Temperaturbereich ergibt, will man unerwünschte, durch die Paarung unterschiedlicher Werkstoffe auftretende Verziehungen und Zwangsbedingungen verhindern, die sich auf die Genauigkeit der Meßwerte ungünstig auswirken. Diese Koordinaten-Meßmaschinen werden daher in aller Regel nur in klimatisierten Räumen eingesetzt. Will man solche Koordinaten-Meßmaschinen direkt in einer Fertigung einsetzen, ist es erforderlich, speziell für sie eine Umhausung vorzusehen, um die Umgebungstemperaturbedingungen gleichmäßig zu halten. Dies ergibt aber eine schlechte Zugänglichkeit, weil der Zutritt zu solchen Umhausungen den Einsatz von Schleusen etc. bedingt, und führt zu einem unerwünschten zusätzlichen Kostenaufwand und Platzbedarf.

Aus der US 6 202 316 B1 ist ein Koordinatenmeßgerät mit einem in X-Y-Z-Richtung beweglichem Meßkopf, einem Meßtisch, und einer durch einer durch Führungselemente geführten Trageeinrichtung für die Meßkopfbewegung, die an einem mit einer Stütze verbundenen Grundkörper befestigt sind, bekannt.

Aus der DE 43 25 337 A1 ist ferner ein Koordinatenmeßgerät in Portalausführung bekannt. Das Koordinatenmeßgerät weist einen Meßtisch, einen beweglichen Meßkopf, zwei seitliche Tragsäulen und einen eigen- und torsionssteifen, als Kastenträger ausgeführten Portal-Querbalken auf, an dem eine Trageinrichtung für den Meßkopf befestigt ist. Dabei verlaufen Querstreben in Längsrichtung des Kastenträgers. Als Führungsschienen dienen zwei Gleitflächen einer einstückig mit dem Kastenträger ausgeführten Führungsfläche.

Ausgehend hiervon stellt nun die Erfindung darauf ab, eine Koordinaten-Meßmaschine vorzuschlagen, bei der aufgezeigte Nachteile des Standes der Technik weitgehend vermieden sind und die insbesondere in einem größeren Temperaturbereich (im Bereich von etwa 20° C bis 40° C) eingesetzt werden kann, wobei unerwünschte Verfälschungen des Meßergebnisses durch Temperatureinflüsse oder Torsions- oder Biegebeanspruchungen weitestgehend vermieden werden.

Erfindungsgemäß wird dies erreicht durch eine Koordinaten-Meßmaschine zur Vermessung eines dreidimensionalen mit einem Meßtisch, Werstücks, auf dem das Werkstück positionierbar ist, mit einem Meßkopf, mit dem das Werkstück in drei Raumrichtungen relativ zum Meßtisch abtastbar ist, und mit einem eigensteifen an einer Stütze befestigten Grundkörper, der als ein biege- und torsionssteifer Kastenträger mit in seinem Inneren verlaufenden Querversteifungsstreben ausgebildet ist und der auf einer Vorderwand zwei Führungsschienen aufweist, auf denen eine erste Trageeinrichtung für den Meßkopf in eine erste Raumrichtung bewegbar ist, die Führungselemente aufweist, längs derer der Meßkopf ; mindestens in einer weiteren, zur ersten senkrechten Raumrichtung verfahrbar ist, wobei die zwei Führungsschienen an den Grundkörper anmontiert sind und auf ihren dem Grundkörper zugewandten Rückseiten formschlüssig von den Querversteifungsstreben abgestützt werden.

Durch die erfindungsgemäße Verwendung eines eigensteifen Grundkörpers, in Form eines biege- und torsionssteifen Kastenträgers, für die Befestigung der beiden Führungsschienen zum Verfahren des Auslegers in X-Richtung wird zunächst der Vorteil erreicht, daß zwischen den Führungsschienen und dem sie tragenden Element keine unterschiedlichen Werkstoffpaarungen mehr vorliegen müssen, weil die Werkstoffe der Führungsschienen und des Kastenträgers unabhängig von dem Werkstoff des Elementes, an dem der Kastenträger befestigt wird, aufeinander abgestimmt werden können. Dadurch scheiden Ungenauigkeiten infolge unterschiedlicher Werkstoffpaarungen und darauf zurückgehende Verfälschungen des Meßergebnisses bei der erfindungsgemäßen Koordinaten-Meßmaschine aus. Bevorzugt wird dabei der Grundkörper bzw. der Kastenträger direkt an einer an einem Maschinenrahmen ausgebildeten Stütze, d. h. am Maschinenrahmen selbst, befestigt.

Die Ausbildung des Kastenträgers als biege- und torsionssteifer Kastenträger stellt sicher, daß die auftretenden Biege- und Torsionsmomente von ihm ohne weiteres aufgenommen werden können, ohne daß es zu störenden Verbiegungen oder Torsionen an ihm und an den Führungsschienen kommt. Dabei ist der biege- und torsionssteife Kastenträger aufgrund seiner Eigensteifigkeit auch unabhängig vom Untergrund, auf dem er fixiert wird, so daß eine solche Koordinaten-Meßmaschine auch nahezu beliebig in eine Fertigung integriert werden kann. Zudem läßt sich ein biege- und torsionssteifer Kastenträger besonders einfach und mit relativ geringem Aufwand im Sinne einer besonders großen Steifigkeit der Struktur auslegen, wodurch sich unter Belastung eine außerordentlich geringe Deformation des Kastenträgers (und der an ihm befestigten Führungsschienen) bei Ausnutzung der Werkstoffeigenschaften erzielen läßt.

Die Konstruktion des biege- und torsionssteifen Kastenträgers kann in jeder geeigneten Art und Weise erfolgen. So kann er z. B. als ein im Querschnitt dreieckförmiges Profil gebildet sein, wobei dieses Dreieck insbesondere gleichschenkelig oder gleichseitig ausgebildet ist und im erstgenannten Fall die Führungsschienen an den beiden Endkanten der Basis angebracht sind. Ganz besonders bevorzugt wird als biege- und torsionssteifer Kastenträger jedoch ein im Querschnitt rechteckiges, bevorzugt quadratisches, Profil eingesetzt. Eine besonders große Steifigkeit in Verbindung mit relativ einfachen konstruktiven Maßnahmen läßt sich bei einem solchen Träger dadurch erreichen, daß Querversteifungsstreben vorgesehen sind, die in seinem Inneren schräg verlaufen, wobei sie mit ihrem dem Meßtisch abgewandten Endbereich an einem Eckbereich einer Seitenwand des Kastenträgers befestigt sind und mit ihrem anderen Ende zu dem gegenüberliegenden Eckbereich aus Vorderwand und anderer Seitenwand des Kastenträgers verlaufen, wobei femer die beiden Führungsschienen an diesen beiden Eckbereichen der Vorderwand auf dort angebrachten Stahlleisten befestigt sind und jede Querversteifungsstrebe mit ihrem einen, einem solchen Eckbereich aus Vorderwand und Seitenwand zugewandten Ende die dort angeordnete Stahlleiste sowohl auf deren Rückseite wie auch, senkrecht hierzu, auf deren der anderen Stahlleiste zugewandten Seite abstützt. Dabei werden bevorzugt die Querversteifungsstreben abwechselnd flächendiagonal nebeneinander im Inneren des Kastenträgers verlaufend angeordnet, wobei sie direkt nebeneinander oder mit nur kleinen Abständen zueinander angebracht sein können. Bevorzugt werden die Querversteifungsstreben in Form von Hohlprofilen, Stäben und/oder Platten ausgeführt sind, wobei ganz besonders Hohlprofile aus Stahl mit einem rechteckigen Querschnitt eingesetzt werden.

Auf diese Weise können mit geringem konstruktiven Aufwand außerordentlich biege- und torsionssteife Kastenträger eingesetzt werden, wobei innerhalb eines solchen Kastenträgers sowohl gleiche, als auch verschiedene Arten von Querversteifungsstreben Einsatz finden können.

Eine weitere bevorzugte Ausgestaltung der Erfindung besteht auch darin, daß zwischen den Querversteifungsstreben innerhalb des Kastenträgers über dessen gesamten oder im wesentlichen gesamten Querschnitt verlaufende Schottwände zwischengeschaltet sind, die mit den jeweils angrenzenden Querversteifungsstreben und mit den Wänden des Kastenträgers verbunden sind. Dadurch läßt sich eine noch weiter erhöhte Biege- und Torsionssteifigkeit des Kastenträgers und damit eine bemerkenswerte Starrheit desselben erreichen.

Da üblicherweise die Leisten zur Befestigung der Führungsschienen aus Stahl hergestellt sind, ist es aus thermischen Gründen empfehlenswert, zum Erreichen eines möglichst gleichen thermischen Ausdehnungskoeffizienten auch den Kastenträger (bzw. dessen einzelne Elemente) aus einem gleichen oder entsprechenden Stahl herzustellen, so daß diese aneinander befestigten Teile im wesentlichen ein gleiches thermisches Ausdehnungsverhalten haben.

Die Verbindung der einzelnen Elemente des Kastenträgers kann in jeder geeigneten Art und Weise erfolgen. Aus Kostengründen und aus Gründen einer besonders großen Flexibilität bei der Konstruktion und bei Anpassungen ist es jedoch von großem Vorteil, wenn der Kastenträger als eine Schweißkonstruktion ausgeführt ist.

Die erfindungsgemäße Koordinaten-Meßmaschine führt aufgrund der gewählten erfindungsgemäßen Struktur bei dem Belastungsfall einer Befestigung der Führungsschienen auf der dem Meßtisch zugewandten Vorderseite des Kastenträgers zum Auftreten einer Zugkraft in der oberen Linearführung und einer Druckkraft in der unteren Linearführung am Kastenträger dazu, daß die bei ihnen auftretenden Deformationen genügend klein sind, um das Entstehen unerwünschter Meßwertverfälschungen zu vermeiden. Da der erfindungsgemäß eingesetzte biege- und torsionssteife Kastenträger aufgrund seiner großen Eigensteifigkeit völlig unabhängig von dem Element ist, an dem er fixiert wird (z. B. dem Maschinengestell), ist die erfindungsgemäße Koordinaten-Meßmaschine nicht nur von einem im Vergleich zum Stand der Technik relativ einfachen technischen Aufbau, sondern auch von einer besonders großen Flexibilität hinsichtlich Konstruktion und der Möglichkeit einer Anpassung an bestimmte Einsatzfälle.

Eine bevorzugte Ausgestaltung der erfindungsgemäßen Koordinaten-Meßmaschine besteht darin, daß eine erste Trageinrichtung an dem Kastenträger entlang der von letzterer festgelegten ersten Raumrichtung verschiebbar ist und eine zweite Raumrichtung für die Bewegung des Meßkopfes festlegt.

Vorteilhafterweise legen im Falle einer Portalanordnung der Koordinaten-Meßmaschine der Kastenträger und die erste Trageinrichtung jeweils eine horizontal liegende Raumrichtung fest, wobei diese beiden Raumrichtungen ihrerseits jedoch wieder senkrecht zueinander ausgerichtet sind.

Bevorzugt wird bei der erfindungsgemäßen Koordinaten-Meßmaschine eine zweite Trageinrichtung an der ersten Trageinrichtung entlang der zweiten Raumrichtung verschiebbar vorgesehen, wobei diese zweite Trageinrichtung eine dritte Raumrichtung für die Relativbewegung des Meßkopfes zum Meßtisch festlegt.

Dabei ist bevorzugt die durch die dritte Trageinrichtung festgelegte Raumrichtung vertikal ausgerichtet.

Eine weitere vorteilhafte Ausgestaltung der erfindungsgemäßen Koordinaten-Meßmaschine besteht für den Fall einer Ständeranordnung dieser Koordinaten-Meßmaschine darin, daß der Kastenträger eine horizontal liegende Raumrichtung und die erste Trageinrichtung eine vertikal liegende Raumrichtung festlegen, wobei dann somit die zweite Trageinrichtung eine horizontal ausgerichtete Raumrichtung festlegt.

In einer weiteren bevorzugten Ausgestaltung der Erfindung wird bei einer erfindungsgemäßen Koordinaten-Meßmaschine vorgesehen, daß an einer oder mehreren der einzelnen vorhandenen Trageinrichtungen jeweils eine Bremse zum Verhindern unkontrollierter Bewegungen eines an der jeweiligen Trageinrichtung längs der von derselben festgelegten Raumrichtung verschiebbaren Elementes angeordnet ist. Eine solche Bremse läßt sich vorzugsweise für eine Notausschaltung einsetzen, wenn z. B. der Strom bzw. die Spannung ausfällt, um in einem solchen Notfall (oder auch in einem anderen Notfall) die dann noch auftretenden Bremswege zu verkürzen. Eine solche Bremse kann dabei in jeder geeigneten Art und Weise ausgebildet werden, wobei hier insbesondere auch eine Ausbildung als mechanisch wirksame, federbetätigte Bremse eingesetzt werden kann. Ganz besonders bevorzugt wird jedoch jede Bremse als Magnetbremse ausgebildet.

Mit Vorteil können bei einer erfindungsgemäßen Koordinaten-Meßmaschine auch mehrere Baugruppen mit jeweils einer durch einen eigensteifen Grundkörper gebildeten Trageinrichtung und mindestens der daran beweglich angeordneten ersten Trageinrichtung vorgesehen sein, wobei bevorzugt die Baugruppen einander paarweise gegenüberstehen oder in einer Reihe angeordnet sind.

Im Gegensatz zum dem eingangs angegebenen Stand der Technik ist bei der erfindungsgemäßen Koordinaten-Meßmaschine dadurch, daß der erste Tragkörper (also die Grundachse) selbst bereits eigensteif ausgebildet wird, der Vorteil erreicht, daß es damit auf die Steifigkeit des Fundamentes, einer eventuellen Aufhängung oder einer sonstigen Befestigungsbasis dieser Trageinrichtung nicht mehr primär ankommt.

Damit ermöglicht es die Erfindung, mit ein und derselben Trageinrichtung (etwa einem biegeund torsionssteifen Kastenträger) Koordinatenmeßgeräte unterschiedlichster Bauform ausführen zu können, sei es in Portalbauweise, in Freiarmbauweise, in Ständerbauweise oder in einer sonstigen Bauweise, bei denen die Grundachse (X-Achse) sich z. B. an einer Decke eines Raumes befinden oder sogar in beliebiger Orientierung im Raum vorliegen kann, wobei im Sinne der gewählten Terminologie der Erfindung jeweils dann das Element, an dem dieser Grundkörper befestigt ist, als "Stütze" bezeichnet ist.

Die erfindungsgemäße Koordinaten-Meßmaschine eignet sich daher ganz besonders für ein vielseitiges, an individuelle Einsatzfälle optimal anpaßbares Programm von KoordinatenMeßgeräten. Dies gilt unabhängig davon, ob diese als Einzelmeßplatz verwendet werden oder vielleicht in eine Transporteinrichtung innerhalb einer Fertigungslinie integriert sind. Darüber hinaus ermöglicht es die Erfindung Anordnungen, bei denen mehrere Systeme gleichzeitig Messungen an einem Werkstück vornehmen, sei es in Tandem-Anordnung, in Reihenanordnung oder dgl.

Die Erfindung wird nachfolgend anhand der Zeichnung im Prinzip beispielshalber noch näher erläutert. Es zeigen:
- Fig. 1: eine Perspektivansicht einer erfindungsgemäßen Koordinaten-Meßmaschine, schräg von vorne;
- Fig. 2: eine Perspektivansicht eines torsions- und biegesteifen Kastenträgers mit Querversteifungsstreben sowie anmontierten Führungsschienen für eine erfindungsgemäße Koordinaten-Meßmaschine;
- Fig. 3: eine perspektivische Frontansicht eines erfindungsgemäßen torsions- und biegesteifen Kastenträgers mit Querversteifungsstreben, Schottwänden sowie an ihm befestigten Führungsschienen, jedoch mit abgenommener Frontwand;
- Fig. 4: eine perspektivische Rückansicht des Kastenträgers aus Fig. 3, mit abgenommener Rückwand, und
- Fig. 5: einen Querschnitt durch einen erfindungsgemäßen Kastenträger mit Querversteifungsstreben sowie an ihm montierten Führungsschienen.
- Fig. 6: eine Perspektivansicht (teils aufgebrochen) einer anderen Ausführungsform eines erfindungsgemäßen Kastenträgers mit Ausleger und Meßkopf, und
- Fig. 7: eine Seitenansicht einer anderen Ausführungsform einer erfindungsgemäßen Koordinaten-Meßmaschine.

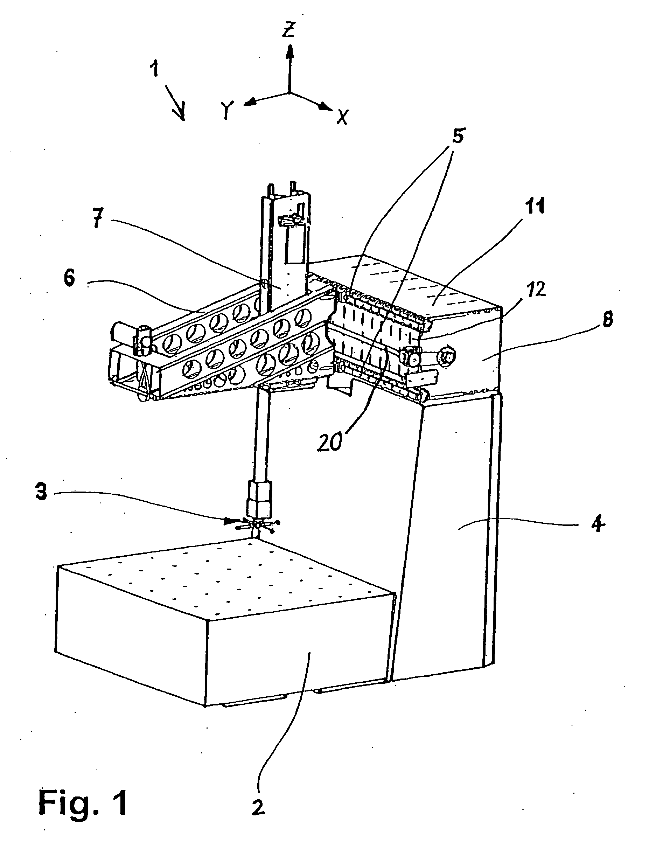

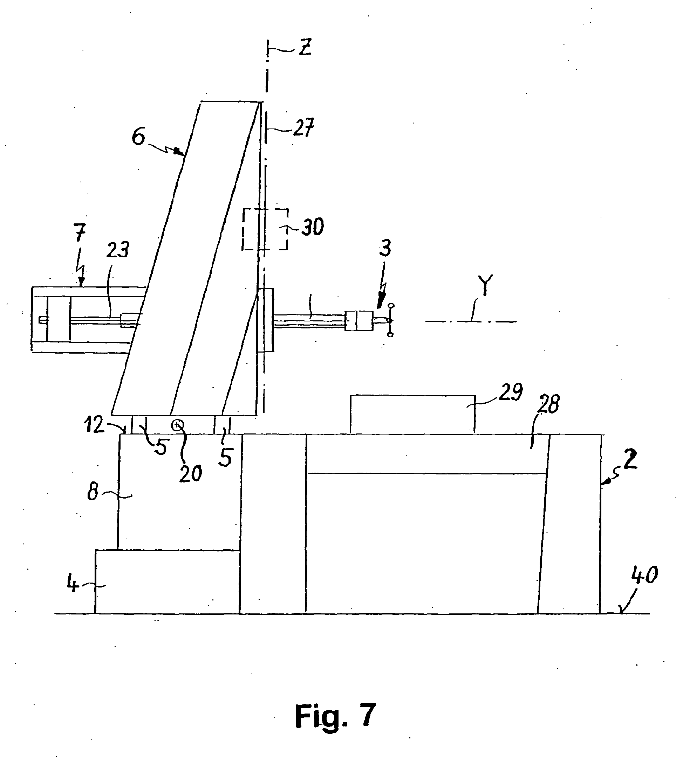

Die Fig. 1 und die Fig. 7 zeigen Koordinaten-Meßmaschinen 1, jeweils mit einem Meßtisch 2, an dessen einer Seite eine Stütze 4 hochläuft, die auch z. B. von einem Maschinengestell, auf dem der Meßtisch 2 abgestützt ist, gebildet werden kann.

Am oberen Ende der Stütze 4 ist jeweils ein torsions- und biegesteifer Kastenträger 8 befestigt, wobei Stütze 4 und Kastenträger 8 sich über die gesamte Länge des Meßtisches 2 erstrecken.

Bei der Ausführungsform gemäß Fig. 1 ist der torsions- und biegesteife Kastenträger 8 so auf der Stütze 4 montiert, daß auf seiner dem Meßtisch 2 zugewandten Seite 12 zwei Führungsschienen 5 (X-Linearführungen) befestigt sind, die zueinander parallel und auch parallel zur Oberfläche des Meßtisches 2 liegen. Bei der Ausführungsform nach Fig. 7 hingegen ist der Kastenträger oben auf der Stütze 4 so montiert, daß seine Führungsschienen 5 auf seiner Oberseite 12' parallel zueinander und ebenfalls parallel zur Oberfläche des Meßtisches 2 vorliegen.

Auf beiden Führungsschienen 5 ist eine erste Trageinrichtung in Form eines Auslegers 6 beweglich gelagert, der einen Meßkopf 3 zur Vermessung eines auf den Meßtisch 2 aufspannbaren Werkstücks 32 trägt (das Werkstück 32 ist nur in Fig. 7 und nicht in Fig. 1 dargestellt). Während der Ausleger 6 in Fig. 1 nach vorne ausragt und über den Meßtisch 2 übersteht, ragt er bei der Ausführungsform nach Fig. 7 vertikal nach oben.

Längs der Führungsschienen 5 kann der Ausleger 6 jeweils parallel zur Oberfläche des Meßtisches 2 in dessen Längsrichtung (X-Richtung) verfahren werden.

Der Ausleger 6, der seinerseits als eine erste Trageinrichtung zum Tragen und Verfahren des Meßkopfes 3 darstellt, trägt geeignete Führungselemente, durch welche eine zweite Trageinrichtung 7 für den Meßkopf 3 in eine andere Raumrichtung (Y- und Z-Richtung), die zur Verfahrrichtung des Auslegers 6 senkrecht verläuft, verfahrbar ist. Der Meßkopf 3 ist dabei mittels der zweiten Trageinrichtung 7 über die Breite des Meßtisches 2 verfahrbar und in seiner Höhe relativ zum Meßtisch 2 verstellbar.

Die Führungsschienen 5 sind beim Ausführungsbeispiel der Fig. 1 jeweils an den Eckbereichen des Übergangs zwischen einer Vorderwand 12, die hier dem Meßtisch 2 zugewandt ist, und den beiden in diese einmündenden Seitenwänden 11 des Kastenträgers 8 befestigt.

Beim Ausführungsbeispiel der Fig. 7 ist der Kastenträger 8 hingegen in einer anderen Raumausrichtung befestigt, nämlich so, daß seine Vorderwand 12 mit den Führungsschienen 5 oben liegt, wobei hier der Ausleger 6 als erste Trageinrichtung vertikal nach oben ragt und durch seine Führungselemente eine Verfahrbarkeit des Meßkopfes 3 in Z-Richtung festgelegt wird.

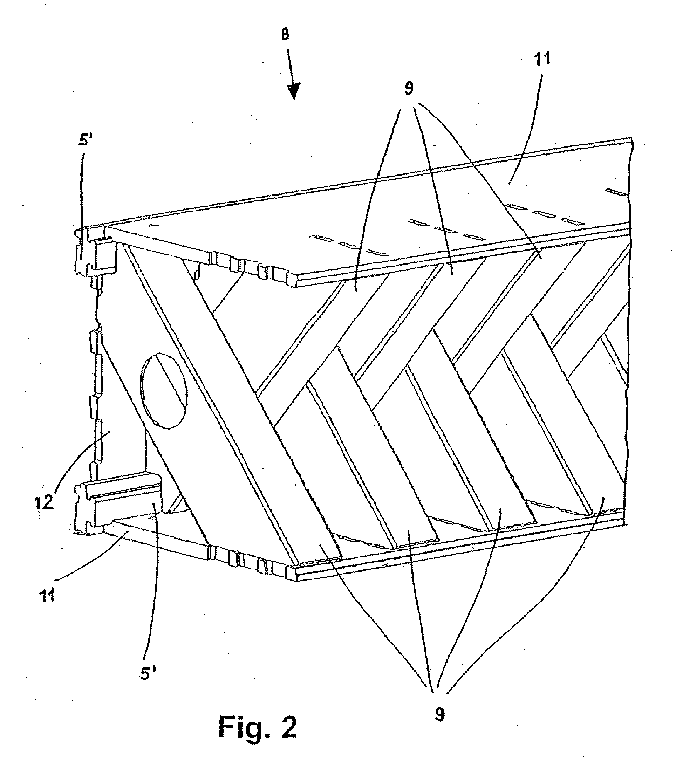

Fig. 2 zeigt eine perspektivische Ansicht eines torsions- und biegesteifen Kastenträgers 8 mit Querversteifungen 9 sowie zwei an seiner Vorderseite 12 (die in Fig. 1 dem Meßtisch 2 zugewandt ist) angebrachten, zueinander parallelen Stahlleisten 5' zur Aufnahme der Führungsschienen 5 (letztere sind in Fig. 2 nicht dargestellt). In der zeichnerischen Darstellung der Fig. 2 ist die Rückwand des Kastenträgers 8 zur besseren Darstellung weggelassen.

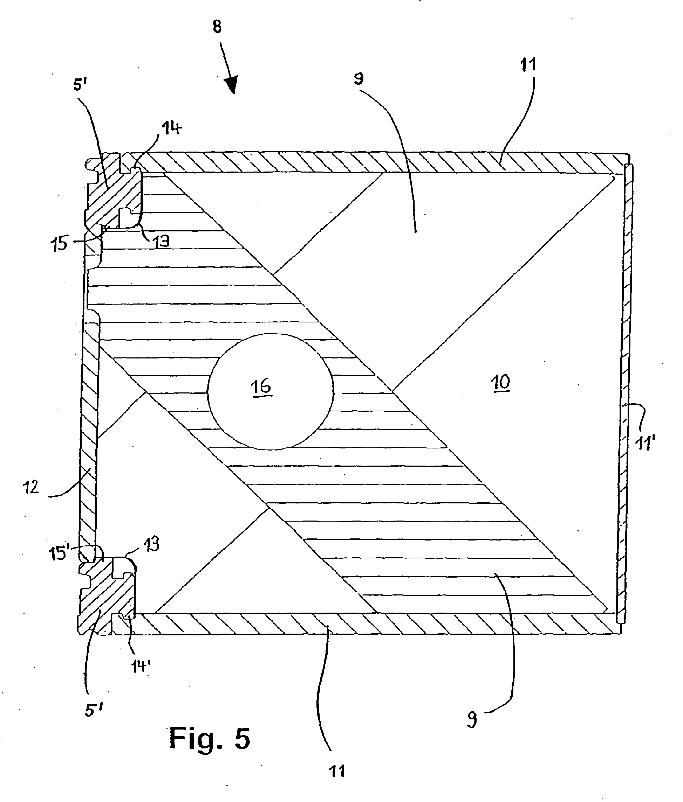

Der Kastenträger 8 aus Fig. 2 weist im Querschnitt ein quadratisches Profil auf, das durch die beiden oberen und unteren Seitenwände 11, die Vorderwand 12 und eine (in Fig. 2 allerdings nicht dargestellte) Rückwand 11' (vgl. Fig. 5) gebildet wird. Im Inneren des Kastenträgers 8 sind schräg verlaufende Querversteifungsstreben 9, kreuzförmig abwechselnd, angeordnet, d. h. zwei jeweils nebeneinanderliegende Querversteifungsstreben 9 sind in ihrer Lage hier um 90° zueinander versetzt ausgerichtet (die Versetzung kann auch unter einem anderen Winkel erfolgen). Sie verlaufen diagonal im Inneren des Kastenträgers 8, und zwar in der in Fig. 2 speziell gezeigten Anordnung, auf deren zeichnerische Darstellung ausdrücklich als wesentlich verwiesen wird. Die Anordnung ist so gewählt, daß jede Querverstrebung 9 an ihrem einen von der Vorderwand 12 abgewandten Ende sich am dortigen Endbereich einer zugeordneten Seitenwand 11 auf dieser abstützt und dort mit ihr verschweißt ist. An ihrem anderen, vorderen (d. h. der Vorderwand 12 des Kastenträgers 8 zugewandten) Ende ragt die betreffende Querversteifungsstrebe 9 in den dortigen Eckbereich des Kastenträgers 8, der aus der oberen Seitenwand 11 und der Vorderwand 12 des Kastenträgers 8 sowie der in diesem Endbereich angeordneten Stahlleiste 5' besteht. Dabei stützt diese Querversteifungsstrebe 9 die dem Meßtisch 2 abgewandte Rückseite der Stahlleiste 5' ab und bildet auch auf der senkrecht hierzu liegenden Unterseite dieser Stahlleiste 5' (bzw. bei solchen Querversteifungsstreben 9, die von hinten oben nach vorne unten verlaufen: auf der Oberseite der entsprechenden Stahlleiste 5') ebenfalls eine Abstützung aus. Mit ihren restlichen Endflächen ist die jeweilige Querversteifungsstrebe 9 dann sowohl mit der oberen Seitenwand 11, wie mit der Vorderwand 12 des Kastenträgers 8, bevorzugt durch Schweißung, verbunden.

Ansonsten stützt sich jede Stahlleiste 5' (und damit auch die an ihr montierte Führungsschiene 4), u. a. auch durch Formschluß (wie Fig. 2 zeigt), ihrerseits auch noch gegen die zugeordnete Seitenwand 11 und die Vorderwand 12 des Kastenträgers 8 ab.

Durch eine solche Anordnung der Querversteifungsstreben 9 ist es möglich, nicht nur eine hervorragende Versteifung des Kastenträgers 8 als ganzer Einheit bzw. als geschlossenes Element zu bewirken, sondern zusätzlich auch noch die spezifischen Belastungen, die an den Führungsschienen 5 durch den Ausleger 6 (insbesondere auch beim Verfahren und beim Messen) auftreten, besonders wirkungsvoll und zielgerichtet abzustützen und aufzunehmen.

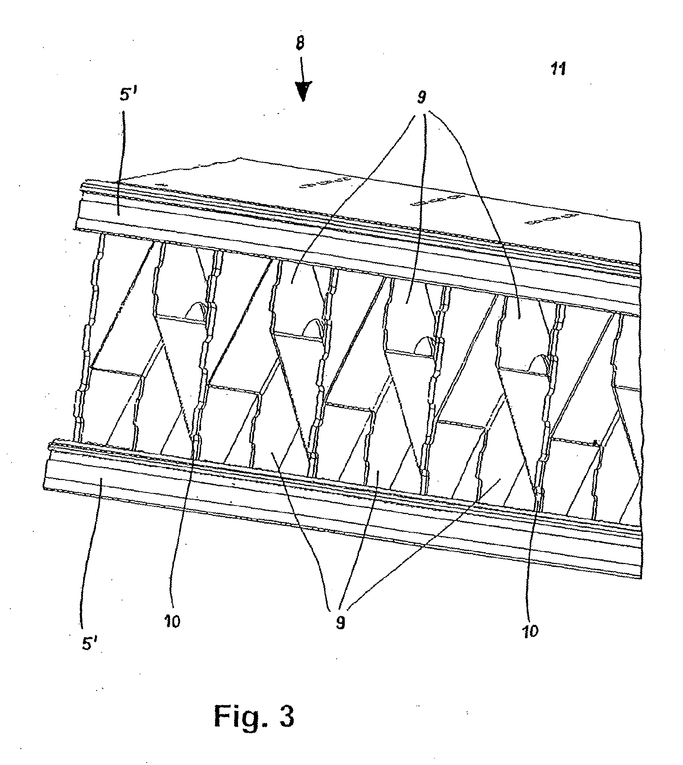

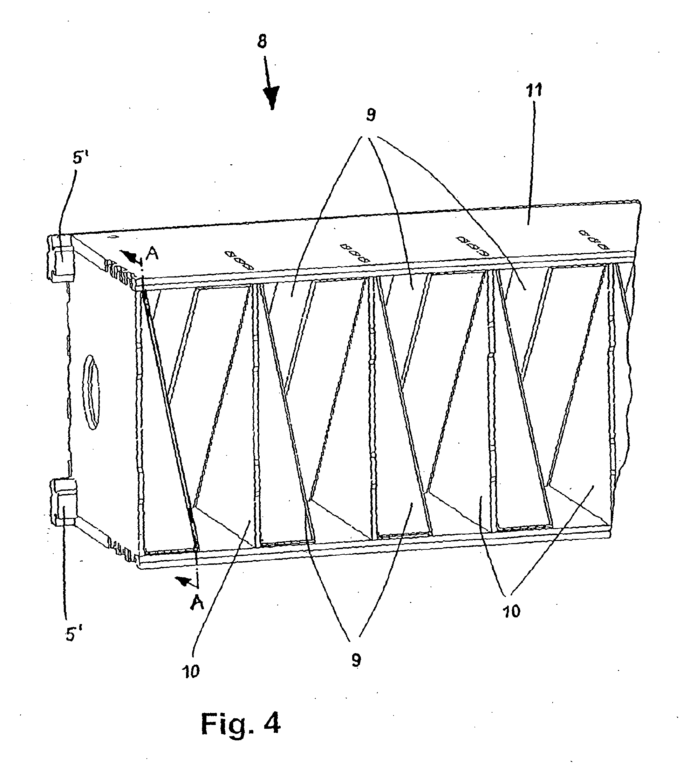

In Fig. 3 ist eine perspektivische Frontansicht eines torsions- und biegesteifen Kastenträgers 8 und in Fig. 4 dessen Rückseite, ebenfalls perspektivisch, gezeigt, wobei in Fig. 3 die Vorderwand und in Fig. 4 die Rückwand der besseren Übersichtlichkeit halber weggelassen sind. Hier weist der Kastenträger 8 nicht nur Querversteifungsstreben 9, sondern zusätzlich auch noch Schottwände 10 auf, deren jede senkrecht zu seiner Vorderwand 12 bzw. Rückwand 11' verläuft und den gesamten Innenquerschnitt des Kastenträgers 8 ausfüllt, d. h. an allen ihren seitlichen Endkanten an einer entsprechenden Seitenfläche des Kastenträgers 8 anliegt und (bevorzugt durch Verschweißen) dort befestigt ist. An der Vorderseite des Kastenträgers 8 sind wieder zwei Stahlleisten 5' zur Befestigung von Führungsschienen parallel zueinander angebracht.

Wie aus Fig. 3 unschwer entnommen werden kann (und wie dies auch in Fig. 2 schon angedeutet ist), sind die Querversteifungsstreben 9 in Form rechteckiger Stabprofile (Hohlprofile) ausgebildet, die aus Vierkant-Stahlrohr bestehen und deren Enden sich jeweils an der zugeordneten Innenbegrenzungsfläche des Kastenträgers 8 abstützen. Die Querversteifungsstreben 9 liegen seitlich direkt nebeneinander, wobei nach zwei Querversteifungsstreben 9 (mit abwechselnder Neigung, vgl. auch Fig. 2) jeweils eine Schottwand 10 zwischengeschaltet und mit den an ihr beidseits anliegenden Querversteifungsstreben 9 zusätzlich verbunden ist (wieder bevorzugt durch Schweißung).

Fig. 5 zeigt schließlich noch einen Querschnitt durch den Kastenträger nach Fig. 4, wobei der Schnitt in der Schnittebene A-A liegt, wie sie in Fig. 4 angegeben ist.

Aus Fig. 5 ist die Abstützung der Stahlleisten 5' speziell auch durch die jeweiligen Querversteifungsstreben 9 gut erkennbar, insbesondere die Rückabstützung jeder Stahlleiste 5', die Abstützung senkrecht hierzu (in Richtung zur anderen Stahlleisten 5' hin) sowie zudem die gleichzeitige Abstützung an der Vorderwand 12 und am Endbereich der zugeordneten Seitenwand 11.

Zur Abstützung der jeweiligen Stahlleisten 5' ist an dem entsprechenden Endbereich der einzelnen Querversteifungsstreben 9 jeweils eine Aussparung 13 angebracht, so daß eine formschlüssige Aufnahme der Stahlleisten 5' auch durch die entsprechende Aussparung 13 der einzelnen Querversteifungsstreben 9 erfolgt. Infolge dieser Aussparungen 13 können die Querversteifungsstreben 9 die Stahlleisten 5' zusätzlich zu deren Abstützung an den Seitenwänden 11 und 12 abstützen.

Durch die gewählte Anordnung wird die obere Stahlleiste 5' und damit auch die auf ihn montierte Führungsschiene 5 von den sie stützenden Querversteifungsstreben 9 (also denen, die von hinten unten schräg nach vorne oben verlaufen) derart abgestützt, daß Zugkräften, die durch das Gewicht des Auslegers 6 und durch Reaktionskräfte beim Messen entstehen, entgegengewirkt wird; hingegen wird die untere Führungsschiene 5 von den anderen Querversteifungsstreben 9 so abgestützt, daß Druckkräfte auf die jeweilige Führungsschiene 5 gut aufgenommen werden können. Für die Schottwände 10 gilt ähnliches, jedoch mit der Abwandlung, daß jede Schottwand 10 gleichzeitig die obere und die untere Stahlleiste 5' bzw. Führungsschiene 5 abstützt.

Wie Fig. 5 ferner zeigt, liegt die obere Stahlleiste 5' mit einem Vorsprung 14 formschlüssig in einer auf der Innenseite der oberen Seitewand 11 des Kastenträgers 8 ausgebildeten Nut 14, wobei ein weiterer Vorsprung 15 der oberen Stahlleiste 5' die Vorderwand 12 des Kastenträgers 8 formschlüssig hintergreift. Auch dadurch wird die Stahlleiste 5' zusätzlich zu der Abstützung durch die Querversteifungsstreben 9 gehalten.

Ähnlich liegt die untere Stahlleiste 5' mit einem Vorsprung 14' formschlüssig in einer auf der Innenseite der unteren Seitenwand 11 des Kastenträgers 8 ausgebildeten Nut, wobei ein weiterer Vorsprung 15' der unteren Stahlleiste 5' das vordere Ende der dortigen Seitenwand 11 des Kastenträgers 8 formschlüssig von oben her um- und hintergreift.

Zur Materialersparnis und zur Ausrichtung der einzelnen Querversteifungsstreben 9 sowie eventuell eingesetzter Schottwände 10 zueinander können in jeder derselben ein zentrales Loch 16 vorgesehen sein, durch das z. B. eine (nicht dargestellte) Ausrichtstange eingeführt werden kann. Die Querversteifungsstreben 9 und die Schottwände 10 können dabei nacheinander auf diese Stange geschoben und miteinander verbunden werden, wobei nach der Montagebefestigung der Querversteifungsstreben 9 und Schottwände 10 die Ausrichtstange entfernt wird.

In einer nicht dargestellten Ausführungsform der erfindungsgemäßen Koordinaten-Meßmaschine können auch Querversteifungsstreben im Kastenträger 8 vorgesehen sein, deren Längsachsen nicht senkrecht zur Längsachse des Kastenträgers 8 verlaufen, sondern die z. B. raumdiagonal im Inneren des Kastenträgers 8 angeordnet sind. Zum Erreichen einer großen Steifigkeit ist es jedoch besonders vorteilhaft, wenn in jedem Fall sichergestellt wird, daß auch bei einer solchen Anordnung der Querversteifungsstreben 9 insgesamt eine symmetrische Anordnung der Streben im Inneren des Kastenträgers 8 vorliegt.

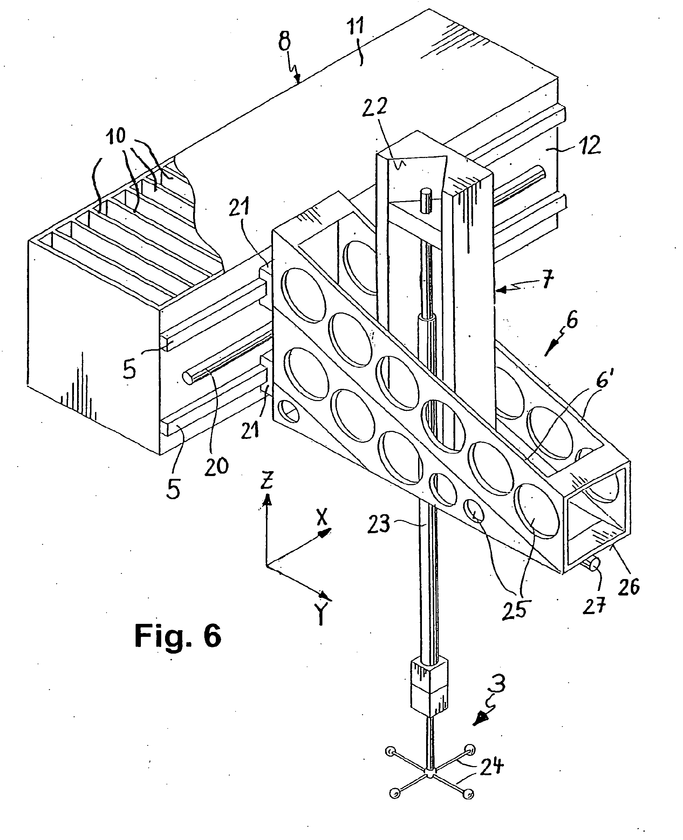

Die Fig. 6 zeigt in einer Perspektivansicht, in welcher der Kastenträger 8 an seiner oberen Seitenwand 11 teilweise aufgebrochen ist, noch einmal eine andere Ausführungsform eines erfindungsgemäßen Kastenträgers, bei der nämlich die Versteifung in dessen Inneren nur durch eine Vielzahl von in X-Richtung in kleinen Abständen zueinander versetzt angeordneten, senkrecht zur X-Richtung verlaufenden Schottwänden 10 erfolgt. Die Anordnung ist so gewählt, daß die Eigensteifigkeit des Kastenträgers 8 hinsichtlich dessen elastischen Verformungen aller Art infolge der einwirkenden Kräfte ausreichend groß bemessen ist, daß damit die Genauigkeit herkömmlicher Koordinaten-Meßmaschinen erreicht werden kann, bei denen die Steifigkeit der Grundachse durch ein steifes Fundament oder durch steife Fundamentkörper, etwa durch eine Granitplatte, gebildet wird.

Aus Fig. 6 sind zudem in der hier (im Vergleich zu der Darstellung der Fig. 1) etwas vergrößert gewählten Illustration noch einige zusätzliche Einzelheiten gezeigt:
So sind an Kastenträger 8, ganz schematisch, die Führungsschienen 5 angedeutet, die sich in X-Richtung erstrecken und zu denen parallel eine ebenfalls nur schematisch angedeutete Spindel 20 verläuft, die im dargestellten Ausführungsbeispiel mittig zwischen beiden Führungsschienen 5 angeordnet ist.

Auf den Führungsschienen 5 läuft mittels ebenfalls nur prinzipiell dargestellter Schlittenführungen 21 die erste Trageinrichtung in Form des Auslegers 6, durch die eine zweite Bewegungsachse, bei der hier gezeigten Anordnung: die Y-Achse, festgelegt bzw. dargestellt wird.

Der Ausleger 6 ist bei den in den Fig. 1 und 6 dargestellten Ausführungsformen in stabiler Leichtbauweise ausgeführt, wobei der durch ihn gebildete Tragarm im wesentlichen durch parallele Seitenwände 6' gebildet wird, in denen zur Gewichtsersparnis Aussparungen 25 vorgesehen sind. Die erste Trageinrichtung bzw. der Ausleger 6 verjüngt sich in der Seitenansicht in Richtung von dem Kastenträger 8, weg, d. h. bei den in den Fig. 1 und 6 dargestellten Ausführungsformen in einer Richtung derart, daß er über den Meßtisch 2 ragt.

An der Unterseite 26 des Auslegers 6 sind wiederum Elemente zum Verfahren einer zweiten Trageinrichtung 7 in Richtung der zweiten Bewegungsachse (Y-Achse) angebracht, von denen in Fig. 6 lediglich eine äußerst schematisierte zweite Spindel 27 angedeutet ist.

Die zweite Trageinheit 7 kann mittels dieser Bewegungselemente bei dem in Fig. 1 bzw. 6 dargestellten Ausführungsbeispiel in einer dritten Bewegungsrichtung, nämlich in der in Vertikalrichtung laufenden Z-Achse, bewegt werden, die senkrecht zu der Verfahrrichtung an dem Kastenträger 8 und auch zu der an der ersten Trageinrichtung 6 verläuft, wie es durch das in Fig. 6 nur schematisch angedeutete Koordinatensystem (X, Y, Z) dargestellt wird.

Auch die zweite Trageinrichtung 7 besteht aus einem, ggf. in stabiler Leichtbauweise ausgebildeten, eigensteifen Kasten mit einer in Vertikalrichtung (Z-Achse) verlaufenden Ausnehmung 22, in der eine weitere, dritte Spindel 23 sitzt, mit der der Meßkopf 3 in Z-Richtung verfahrbar ist. Der Meßkopf 3 trägt an seinem unteren Ende eine übliche Taststiftanordnung 24 mit (im dargestellten Ausführungsbeispiel) vier jeweils um 90° zueinander versetzt angeordneten Einzelstiften, deren Mittelachsen alle in einer Horizontalebene liegen.

In Fig. 7 ist, wie bereits erwähnt, ein zweites Ausführungsbeispiel einer Koordinaten-Meßvorrichtung gezeigt, bei der die Anordnung des Kastenträgers 8 (als Trageinrichtung) im Raum anders als bei der Ausführungsform nach Fig. 1 vorgesehen ist.

Die Darstellung der Fig. 7 zeigt einen Meßtisch 2 mit einem Werkstückträger 28, auf den ein Werkstück 29 montiert ist. Neben dem Werkstückträger 28, bei dem es sich z. B. um eine Granitplatte oder um eine Platte aus einem sonstigen geeigneten Werkstoff handeln kann, ist seitlich als Stütze 4 ein niedriges Podest angebracht, auf dem die in Fig. 6 gezeigte Anordnung montiert ist, allerdings hier nunmehr in einer Ausrichtung der Komponenten derart, daß die Führungsschienen 5 des Kastenträgers 8, der seinerseits auf der Stütze 4 befestigt ist, auf der Oberseite des Kastenträgers 8 liegen und der Ausleger 6 oberhalb derselben, und zwar vertikal nach oben, also in Z-Richtung ausgerichtet, angeordnet ist. Wiederum verlaufen die Führungsschienen 5, trotz der anderen Raumausrichtung des Kastenträgers 8, in X-Richtung, also seitlich parallel zum Meßtisch 2. Da sich hier die erste Trageinrichtung (in Form des Auslegers 6) in Vertikalrichtung (Z-Richtung) nach oben erstreckt, hat dies zur Folge, daß nunmehr die zweite Trageinrichtung 7 horizontal (also in Y-Richtung) ausgerichtet ist. Dadurch bildet die erste Trageinrichtung 6 hier die vertikale Verschiebeachse (Z-Achse) für die zweite Trageinrichtung 7 aus, wobei letztere die zweite horizontale Verschiebeachse, nämlich die Y-Achse, festlegt.

Dies bedeutet insgesamt, daß die Maschine aus Fig. 6 die in Fig. 7 gezeigte Anordnung, die demgegenüber um 90° nach oben verdreht ist, beinhaltet.

Bei der Darstellung der Fig. 7 ist in einer geeigneten Zuordnung zur vertikalen Raumachse (Z-Achse) eine nur ganz schematisch angedeutete Bremseinrichtung 30 vorgesehen, bei der es sich vorzugsweise um eine Magnetbremse handelt, jedoch auch irgendeine andere, etwa federbetätigte mechanische Bremseinrichtung vorgesehen sein kann. Die Bremse 30 soll verhindern, daß beispielsweise bei Auftreten einer Störung in der Energiezufuhr oder Steuerung die in Vertikalrichtung bewegten Elemente, nämlich der Tastkopf 3 mit der Taststiftanordnung 24, in unkontrollierter Weise abstürzen können. Auch für die beiden anderen Bewegungsachsen (hier: die X- und die Y-Achse) ist die (in Fig. 7 nicht dargestellten) Verwendung einer solchen Bremsanordnung ebenfalls von Vorteil, weil sie im Sinne einer Notbremse im Störfall greifen kann und sicherstellt, daß dann die noch auftretenden Verschiebebewegungen der verschiedenen Trageinrichtungen nur ganz kurz sind.

Die Ständerbauweise einer Koordinaten-Meßvorrichtung, wie sie in Fig. 7 dargestellt ist, eignet sich ganz besonders zum Realisieren von Anlagen, bei denen mehrere solche Meßanordnungen vereinigt sind. So kann z. B. die Anordnung gemäß Fig. 7 spiegelbildlich zum Werkstück 29 ergänzt werden, indem, bei der Darstellung in Fig. 7: rechts vom Werkstück 29, eine zweite solche Anordnung mit einer ersten Trageinrichtung, einer zweiten Trageinrichtung und einer dritten Trageinrichtung positioniert wird, so daß diese beiden Anordnungen z. B. im Tandembetrieb am selben Werkstück 29 arbeiten können. Gleichermaßen ist es denkbar, daß mehrere solcher Meßanordnungen, wie sie in Fig. 7 seitlich des Meßtisches dargestellt sind, in gleicher Ausrichtung hintereinander vorgesehen werden, d. h. in einer Nacheinanderanordnung entlang der Y-Richtung.

## Patentansprüche

1. Koordinaten-Meßmaschine (1) zur Vermessung eines dreidimensionalen mit einem Meßtisch (2), Werkstücks, auf dem das Werkstück positionierbar ist, mit einem Meßkopf (3), mit dem Werkstück in drei Raumrichtungen (X, Y, Z) relativ zum Meßtisch (2) abtastbar ist, und mit einem eigensteifen an einer Stütze (4) befestigten Grundkörper, der als ein biege- und torsionssteifer Kastenträger (8) mit in seinem Inneren verlaufenden Querversteifungsstreben (9, 10) ausgebildet ist und der auf einer Vorderwand (12) zwei Führungsschienen (5) aufweist, auf denen eine erste Trageeinrichtung (6) für den Meßkopf (3) in eine erste Raumrichtung (X) bewegbar ist, die Führungselemente aufweist, längs derer der Meßkopf (3) mindestens in einer weiteren, zur ersten senkrechten Raumrichtung (Y, Z) verfahrbar ist, wobei die zwei Führungsschienen (5) an den Grundkörper (8) anmontiert sind und auf ihren dem Grundkörper zugewandten Rückseiten formschlüssig von den Querversteifungsstreben (9) abgestützt werden.

2. Koordinaten-Meßmaschine nach Anspruch 1, **dadurch gekennzeichnet, daß** die zwei Führungsschienen (5) auf zwei zueinander parallelen Stahlleisten (5') montiert sind und die Stahlleisten (5') auch an der Vorderwand (12) des Kastenträgers (8) formschlüssig abgestützt sind.

3. Koordinaten-Meßmaschine (1) nach Anspruch 1 oder 2, bei der die Stütze (4) einen Teil eines Maschinenrahmens bildet.

4. Koordinaten-Meßmaschine (1) nach Anspruch 2 oder 3, bei welcher der biege- und torsionssteife Kastenträger (8) ein im Querschnitt dreieckförmiges Profil ausbildet, insbesondere in Form eines gleichschenkligen oder gleichseitigen Dreiecks.

5. Koordinaten-Meßmaschine (1) nach einem der Ansprüche 1 bis 3, bei dem der biege-und torsionssteife Kastenträger (8) im Querschnitt ein rechteckiges, bevorzugt ein quadratisches, Profil ausbildet.

6. Koordinaten-Meßmaschine nach den Ansprüchen 2 und 5, **dadurch gekennzeichnet, daß** beide Stahlleisten (5') mit jeweils einem Vorsprung (14, 14') formschlüssig in einer auf jeweils einer Innenseite einer Seitenwand (11, 11') des Grundkörpers ausgebildeten Nut liegen.

7. Koordinaten-Meßmaschine nach Anspruch 2 und 5 oder Anspruch 6, **dadurch gekennzeichnet, daß** beide Stahlleisten (5') mit jeweils einem Vorsprung (15, 15') die Vorderwand (12) des Grundkörpers (8) formschlüssig von oben her um- und hintergreifen.

8. Koordinaten-Meßmaschine (1) nach Anspruch 5, bei der die Querversteifungsstreben (9) im Inneren des Kastenträgers (8) schräg verlaufen und mit ihrem dem Meßtisch (2) abgewandten Endbereich an einem zugeordneten Endbereich einer Seitenwand (11) des Kastenträgers (8) befestigt sind und mit ihrem anderen Ende in den gegenüberliegenden Eckbereich aus Vorderwand (12) und anderer Seitenwand (11) des Kastenträgers (8) verlaufen, wobei ferner die zwei Führungsschienen (5) an den beiden Eckbereichen der Vorderwand (12) angebracht sind und jede Querversteifungsstrebe (9) mit ihrem einen, einem Eckbereich aus Vorderwand (12) und Seitenwand (11) zugewandten Ende die dort angeordnete Führungsschiene (5) sowohl auf deren Rückseite, wie auch, senkrecht hierzu, auf deren der anderen Führungsschiene (5) zugewandten Seite, abstützt.

9. Koordinaten-Meßmaschine (1) nach Anspruch 8. bei der die Querversteifungsstreben (9) abwechselnd flächendiagonal nebeneinander im Inneren des Kastenträgers (8) verlaufen.

10. Koordinaten-Meßmaschine (1) nach Anspruch 9, bei der die Querversteifungsstreben (9) unmittelbar nebeneinander angeordnet sind.

11. Koordinaten-Meßmaschine (1) nach einem der Ansprüche 1 bis 10, bei der die Querversteifungsstreben (9) in Form von Hohlprofilen, Stäben und/oder Platten ausgeführt sind.

12. Koordinaten-Meßmaschine (1) nach Anspruch 11, bei der als Querversteifungsstreben (9) Stahl-Hohlprofile mit einem rechteckigen Querschnitt eingesetzt sind.

13. Koordinaten-Meßmaschine (1) nach einem der Ansprüche 1 bis 12, bei der zwischen den Querversteifungsstreben (9) innerhalb des Kastenträgers (8) über dessen gesamten oder im wesentlichen gesamten Querschnitt verlaufende Schottwände (10) angebracht sind, die mit den jeweils an sie beidseits angrenzenden Querversteifungsstreben (9) und den Wänden (11, 11', 12) des Kastenträgers (8) verbunden sind.

14. Koordinaten-Meßmaschine (1) nach einem der Ansprüche 1 bis 13, bei welcher der Kastenträger (8) und die Führungsschienen (5) aus einem gleichen Stahl bestehen.

15. Koordinaten-Meßmaschine (1) nach einem der Ansprüche 1 bis 14, bei welcher der Kastenträger (8) als eine Schweißkonstruktion ausgeführt ist.

16. Koordinaten-Meßmaschine (1) nach einem der Ansprüche 1 bis 15, bei welcher die erste Trageinrichtung (6) an dem Kastenträger (8) entlang der ersten Raumrichtung (X) verschiebbar ist und eine zweite Raumrichtung (Y; Z) für die Bewegung des Meßkopfes (3) festlegt.

17. Koordinaten-Meßmaschine (1) nach Anspruch 16, bei der im Falle einer Portalanordnung der Koordinaten-Meßmaschine (1) der kastenträger und die erste Trageinrichtung (8; 6) jeweils eine horizontal liegende Raumrichtung (X; Y) festlegen.

18. Koordinaten-Meßmaschine (1) nach Anspruch 16 oder Anspruch 17, bei der eine zweite Trageinrichtung (7) an der ersten Trageinrichtung (6) entlang der zweiten Raumrichtung (Y; Z) verschiebbar ist und eine dritte Raumrichtung (Z; Y) für die Relativbewegung des Meßkopfes (3) zum Meßtisch (2) festlegt.

19. Koordinaten-Meßmaschine (1) nach Anspruch 18, bei der die durch die zweite Trageinrichtung (7) festgelegte Raumrichtung (Z) vertikal ausgerichtet ist.

20. Koordinaten-Meßmaschine (1) nach einem der Ansprüche 16 bis 18, beider für eine Ständeranordnung der Koordinaten-Meßmaschine (1) der Kastenträger (8) eine horizontal liegende Raumrichtung (X) und die erste Trageinrichtung (6) eine vertikal liegende Raumrichtung (7) festlegen.

21. Koordinaten-Meßmaschine (1) nach einem der Ansprüche 16 bis 20, bei der an einer oder mehreren der einzelnen Trageinrichtungen (6; 7; 8) jeweils eine Bremse (30) zum Verhindern von unkontrollierten Bewegungen eines an der jeweiligen Trageinrichtung (6; 7; 8) längs der von derselben festgelegten Raumrichtung (X; Y; Z) verschiebbaren Elementes angeordnet ist.

22. Koordinaten-Meßmaschine (1) nach Anspruch 21, bei der jede Bremse (30) als Magnetbremse ausgebildet ist.

23. Koordinaten-Meßmaschine (1) nach einem der Ansprüche 1 bis 22, **dadurch gekennzeichnet, daß** mehrere Baugruppen mit jeweils einer durch einen eigensteifen Grundkörper (8) gebildeten Trageinrichtung und mindestens einer daran beweglich angeordneten ersten Trageinrichtung (6) vorgesehen sind.

24. Koordinaten-Meßmaschine (1) nach Anspruch 23, bei der die Baugruppen einander paarweise gegenüberstehen.

25. Koordinaten-Meßmaschine (1) nach Anspruch 24, bei der die Baugruppen in einer Reihe angeordnet sind.

## Claims

1. Coordinate measuring machine (1) for measuring a three-dimensional workpiece, having a measuring table (2) on which the workpiece is positionable, a measuring head (3) with which the workpiece is scannable in three spatial directions (X, Y, Z) relative to the measuring table (2), and having an inherently rigid main body attached to a support (4), said main body being configured as a flexurally and torsionally rigid box girder (8) with cross-bracing struts (9, 10) running inside it and having on a front wall (12) two guide rails (5), on which a first carrying device (6) for the measuring head (3) is movable in a first spatial direction (X), said carrying device having guide elements along which the measuring head (3) is traversable in at least one further direction perpendicular to the first spatial direction (Y, Z), wherein the two guide rails (5) are mounted on the main body (8) and are positively supported by the cross-bracing struts (9) on their rear sides facing the main body.

2. Coordinate measuring machine according to claim 1, **characterised in that** the two guide rails (5) are mounted on two steel bars (5') which are parallel to each other and the steel bars (5') are also positively supported on the front wall (12) of the box girder (8).

3. Coordinate measuring machine (1) according to claim 1 or 2, wherein the support (4) forms part of a machine frame.

4. Coordinate measuring machine (1) according to claim 2 or 3, wherein the flexurally and torsionally rigid box girder (8) forms a triangular profile in cross-section, in particular in the form of an isosceles or equilateral triangle.

5. Coordinate measuring machine (1) according to one of claims 1 to 3, wherein the flexurally and torsionally rigid box girder (8) forms a rectangular, preferably a square, profile in cross-section.

6. Coordinate measuring machine according to claims 2 and 5, **characterised in that** both steel bars (5') each having a lug (14, 14') lie positively in a groove formed in each case on one inner side of a side wall (11, 11') of the main body.

7. Coordinate measuring machine according to claims 2 and 5 or claim 6, **characterised in that** both steel bars (5') each with a lug (15, 15') engage positively around and behind the front wall (12) of the main body (8) from above.

8. Coordinate measuring machine (1) according to claim 5, wherein the cross-bracing struts (9) inside the box girder (8) run obliquely and are fixed with their end region facing away from the measuring table (2) to an assigned end region of a side wall (11) of the box girder (8) and with their other end run into the opposing comer region comprised of front wall (12) and other side wall (11) of the box girder (8), whereby in addition the two guide rails (5) are attached to the two corner regions of the front wall (12) and each cross-bracing strut (9), with its one end facing a corner region comprised of front wall (12) and side wall (11), supports the guide rail (5) arranged there, both on its rear side and also, perpendicular to this, on its side facing the other guide rail (5).

9. Coordinate measuring machine (1) according to claim 8, wherein the cross-bracing struts (9) run alternately face-diagonally adjacent to each other inside the box girder (8).

10. Coordinate measuring machine (1) according to claim 9, wherein the cross-bracing struts (9) are arranged immediately adjacent to each other.

11. Coordinate measuring machine (1) according to one of claims 1 to 10, wherein the cross-bracing struts (9) are executed in the form of hollow sections, rods and/or plates.

12. Coordinate measuring machine (1) according to claim 11, wherein hollow steel sections with a rectangular cross-section are used as cross-bracing struts (9).

13. Coordinate measuring machine (1) according to one of claims 1 to 12, wherein attached between the cross-bracing struts (9) inside the box girder (8) and running across its whole or essentially whole cross-section are partition walls (10) which are joined in each case to the cross-bracing struts (9) and to the walls (11, 11') adjacent to them on both sides of the box girder (8).

14. Coordinate measuring machine (1) according to one of claims 1 to 13, wherein the box girder (8) and the guide rails (5) are comprised of an identical steel.

15. Coordinate measuring machine (1) according to one of claims 1 to 14, wherein the box girder (8) is executed as a welded construction.

16. Coordinate measuring machine (1) according to one of claims 1 to 15, wherein the first carrying device (6) is movable on the box girder (8) along the first spatial direction (X) and defines a second spatial direction (Y; Z) for the movement of the measuring head (3).

17. Coordinate measuring machine (1) according to claim 16, wherein in the case of a gantry arrangement of the coordinate measuring machine (1), the box girder and the first carrying device (8; 6) each define a horizontally situated spatial direction (X; Y).

18. Coordinate measuring machine (1) according to claim 16 or claim 17, wherein a second carrying device (7) on the first carrying device (6) is movable along the second spatial direction (Y; Z) and defines a third spatial direction (Z; Y) for the relative movement of the measuring head (3) in relation to the measuring table (2).

19. Coordinate measuring machine (1) according to claim 18, wherein the spatial direction (Z) defined by the second carrying device (7) is aligned vertically.

20. Coordinate measuring machine (1) according to one of claims 16 to 18, wherein for a pillar arrangement of the coordinate measuring machine (1), the box girder (8) defines a horizontally situated spatial direction (X) and the first carrying device (6) defines a vertically situated spatial direction (7).

21. Coordinate measuring machine (1) according to one of claims 16 to 20, wherein arranged on one or a plurality of the individual carrying devices (6; 7; 8) in each case is a brake (30) to prevent uncontrolled movements of an element movable on each carrying device (6; 7; 8) along the spatial direction (X; Y; Z) defined by said device.

22. Coordinate measuring machine (1) according to claim 21, wherein each brake (30) is configured as a magnetic brake.

23. Coordinate measuring machine (1) according to one of claims 1 to 22, **characterised in that** a plurality of subassemblies are provided each having a carrying device formed by an inherently rigid main body (8) and at least a first carrying device (6) arranged movably thereon.

24. Coordinate measuring machine (1) according to claim 23, wherein the subassemblies oppose each other in pairs.

25. Coordinate measuring machine (1) according to claim 24, wherein the subassemblies are arranged in a row.

## Revendications

1. Machine à mesurer les coordonnées (1) pour la mesure d'une pièce à usiner tridimensionnelle, comportant une table de mesure (2) sur laquelle est positionnée la pièce à usiner, une tête de mesure (3) au moyen de laquelle la pièce à usiner peut être balayée dans trois directions spatiales (X, Y, Z) par rapport à la table de mesure (2) et un corps de base à rigidité inhérente (4) fixé à un support qui est réalisé sous la forme d'une poutre-caisson (8) résistante à la flexion et à la torsion, munie de montants de renforcement transversal (9, 10) s'étendant dans son intérieur, et qui présente deux glissières (5) sur une paroi avant (12), glissières sur lesquelles peut être déplacé un premier dispositif porteur (6) pour la tête de mesure (3) dans une première direction spatiale (X), dispositif porteur qui comprend des éléments de guidage le long desquels la tête de mesure (3) peut être déplacée au moins dans une autre direction spatiale par rapport à la première direction spatiale verticale (Y, Z), les deux glissières (5) étant montées sur le corps de base (8) et étant étayées, sur leurs faces arrière tournées vers le corps de base, par coopération de formes, par les montants de renforcement transversal (9).

2. Machine à mesurer les coordonnées selon la revendication 1, **caractérisée en ce que** les deux glissières (5) sont montées sur deux barres d'acier parallèles (5') et **en ce que** les barres d'acier (5') sont également étayées sur la paroi avant (12) de la poutre-caisson (8) par coopération de formes.

3. Machine à mesurer les coordonnées (1) selon la revendication 1 ou 2, dans laquelle le support (4) constitue une partie du bâti de la machine.

4. Machine à mesurer les coordonnées (1) selon la revendication 2 ou 3, dans laquelle la poutre-caisson (8) résistante à la flexion et à la torsion forme un profilé à section transversale triangulaire, notamment ayant la forme d'un triangle isocèle ou équilatéral.

5. Machine à mesurer les coordonnées (1) selon l'une quelconque des revendications 1 à 3, dans laquelle la poutre-caisson (8) résistante à la flexion et à la torsion forme un profilé à section transversale rectangulaire, de préférence carrée.

6. Machine à mesurer les coordonnées selon les revendications 2 et 5, **caractérisée en ce que** les deux barres d'acier (5') reposent, chacune par une saillie (14, 14'), par coopération de formes, dans une rainure réalisée sur une face interne d'une paroi latérale (11, 11') du corps de base.

7. Machine à mesurer les coordonnées selon la revendication 2 et 5 ou la revendication 6, **caractérisée en ce que** les deux barres d'acier (5') viennent en prise, chacune par une saillie (15, 15'), à partir du haut, autour de et par derrière la paroi avant (12) du corps de base (8), par coopération de formes.

8. Machine à mesurer les coordonnées (1) selon la revendication 5, dans laquelle les montants de renforcement transversal (9) s'étendent de manière oblique à l'intérieur de la poutre-caisson (8) et sont fixés, par leur zone d'extrémité ne faisant pas face à la table de mesure (2), à une zone d'extrémité associée d'une paroi latérale (11) de la poutre-caisson (8) et s'étendent, par leur autre extrémité, dans la zone d'angle opposée constituée de la paroi avant (12) et de l'autre paroi latérale (11) de la poutre-caisson (8), les deux glissières (5) étant en outre montées sur les deux zones d'angle de la paroi avant (12) et chaque montant de renforcement transversal (9) étayant, avec son extrémité tournée vers une zone d'angle constituée de la paroi avant (12) et de la paroi latérale (11), la glissière (5) montée à cet emplacement-là à la fois sur sa face arrière et, également, perpendiculairement à cette dernière, sur leur face tournée vers l'autre glissière (5).

9. Machine à mesurer les coordonnées (1) selon la revendication 8, dans laquelle les montants de renforcement transversal (9) s'étendent les uns à côté des autres, en alternance, de manière diagonale à la surface, à l'intérieur de la poutre-caisson (8).

10. Machine à mesurer les coordonnées (1) selon la revendication 9, dans laquelle les montants de renforcement transversal (9) sont disposés directement les uns à côté des autres.

11. Machine à mesurer les coordonnées (1) selon l'une quelconque des revendications 1 à 10, dans laquelle les montants de renforcement transversal (9) sont réalisés sous la forme de profilés creux, de barres et/ou de plaques.

12. Machine à mesurer les coordonnées (1) selon la revendication 11, dans laquelle on utilise des profilés creux en acier avec une section transversale rectangulaire comme montants de renforcement transversal (9).

13. Machine à mesurer les coordonnées (1) selon l'une quelconque des revendications 1 à 12, dans laquelle on a installé, entre les montants de renforcement transversal (9), à l'intérieur de la poutre-caisson (8), des parois séparatrices (10) s'étendant sur sa section transversale entière ou sensiblement entière, parois séparatrices qui sont rattachées aux montants de renforcement transversal (9) adjacents des deux côtés et aux parois (11, 11', 12) de la poutre-caisson (8).

14. Machine à mesurer les coordonnées (1) selon l'une quelconque des revendications 1 à 13, dans laquelle la poutre-caisson (8) et les glissières (5) sont composées d'un même acier.

15. Machine à mesurer les coordonnées (1) selon l'une quelconque des revendications 1 à 14, dans laquelle la poutre-caisson (8) est réalisée en tant que structure soudée.

16. Machine à mesurer les coordonnées (1) selon l'une quelconque des revendications 1 à 15, dans laquelle le premier dispositif porteur (6) peut être déplacé sur la poutre-caisson (8) le long de la première direction spatiale (X) et définit une seconde direction spatiale (Y ; Z) pour le déplacement de la tête de mesure (3).

17. Machine à mesurer les coordonnées (1) selon la revendication 16, dans laquelle, dans le cas d'un agencement en portique de la machine à mesurer les coordonnées (1), la poutre-caisson et le dispositif porteur (8 ; 6) définissent chacun une direction spatiale horizontale (X ; Y).

18. Machine à mesurer les coordonnées (1) selon la revendication 16 ou la revendication 17, dans laquelle un second dispositif porteur (7) est déplaçable sur le premier dispositif porteur (6) le long de la seconde direction spatiale (Y ; Z) et définit une troisième direction spatiale (Z ; Y) pour le mouvement relatif de la tête de mesure (3) par rapport à la table de mesure (2).

19. Machine à mesurer les coordonnées (1) selon la revendication 18, dans laquelle la direction spatiale (Z) définie par le second dispositif porteur (7) est orientée à la verticale.

20. Machine à mesurer les coordonnées (1) selon l'une quelconque des revendications 16 à 18, dans laquelle, pour un agencement en poteau de la machine à mesurer les coordonnées (1), la poutre-caisson (8) définit une direction spatiale située à l'horizontale (X) et le premier dispositif porteur (6) une direction spatiale située à la verticale (7).

21. Machine à mesurer les coordonnées (1) selon l'une quelconque des revendications 16 à 20, dans laquelle, sur un ou plusieurs des différents dispositifs porteurs (6 ; 7 ; 8), on a disposé un frein (30) pour éviter les mouvements incontrôlés d'un élément déplaçable sur le dispositif porteur relatif (6 ; 7 ; 8), le long de la direction spatiale (X ; Y ; Z) définie par ce dernier.

22. Machine à mesurer les coordonnées (1) selon la revendication 21, dans laquelle chaque frein (30) est réalisé sous forme de frein magnétique.

23. Machine à mesurer les coordonnées (1) selon l'une quelconque des revendications 1 à 22, **caractérisée en ce qu'**on a prévu plusieurs modules pourvus chacun d'un dispositif porteur formé d'un corps de base à rigidité inhérente (8) et d'au moins un premier dispositif porteur (6) disposé dessus de manière mobile.

24. Machine à mesurer les coordonnées (1) selon la revendication 23, dans laquelle les modules se font face par paire.

25. Machine à mesurer les coordonnées (1) selon la revendication 24, dans laquelle les modules sont agencés en rangée.
